# EUROPEAN PATENT SPECIFICATION

(11) **EP 1 339 183 B1**
(45) Date of publication and mention of the grant of the patent: **14.06.2006**
(21) Application number: 02290700.0
(22) Date of filing: 20.03.2002
(51) Int. Cl.: H04J 3/16, H04J 3/08

(54) **Method and device for transporting ethernet frames over a transport SDH/SONET network**
Verfahren und System zur Übertragung von Ethernetrahmen in einem SDH/SONET Transportnetz
Procédé et système pour transporter des trames Ethernet dans un réseau de transport optique SDH/SONET

(30) Priority: 22.02.2002 EP 02290445
(43) Date of publication of application: 27.08.2003
(73) Proprietor: ALCATEL, 75008 Paris (FR)
(72) Inventor: Donato, Maggi, 23841 Annone di Brianza (Lecco) (IT); Massimiliano, Rutar, 20040 Carnate (Milano) (IT); Carmela, Ricciardi, 20015 Parabiago (Milano) (IT)
(74) Representative: Menzietti, Domenico

(56) References cited:
- WO-A-00/74282
- WO-A-01/15363
- US-A1- 2001 043 603
- US-B1- 6 189 122

## Description

The present invention relates to the telecommunication field and in particular to a method and network element for transporting Ethernet frames over a transport SDH/SONET network.

As it is known, traffic generated by an Ethernet apparatus is characterized by discontinuities, namely there are periods with a more or less constant sending rate of Ethernet packets and periods during which a rather long time is provided between a received Ethernet frame and the next one. Such an unstable/inconstant traffic is generally termed "bursty". On the contrary, SDH or SONET traffic is characterized by a constant sending/receiving rate. In other words, any network element of a transport SDH/SONET network sends corresponding frames with a regular and constant rate. Furthermore, Ethernet frames do not have a fixed length/size but only a maximum size (1518 bytes).

It is easy to understand that these discrepancies result in a highly difficult interfacing of two technologies having different natures/characteristics.

An already available solution to the above problem allows the mapping of Ethernet frames into SDH/SONET Virtual Containers as a transparent tributary; all incoming bits are transported to the output interface with the related timing information (frequency for recovering the proper bit rate at the reception side). Within the SDH/SONET payload also the dead times between a received Ethernet frame and the following one are mapped.

The general problem of transporting Ethernet frames over a SONET/SDH transport network is presently solved through SONET/SDH virtual concatenation. Ethernet frame transport is performed according to the following main steps: the bytes of one frame are distributed among all the available SDH/SONET Virtual Containers, namely, the first frame byte is mapped in the first VC, the second frame byte is mapped in the second VC and so on; due to the fact that SDH/SONET Virtual Containers can follow different paths, at the ending point, the Virtual Containers should be re-aligned; and the bytes of the Ethernet frames are extracted from the re-aligned Virtual Containers and the frame is finally re-assembled.

In WO 01/15363 A1 a system and method for packet transort in a ring network is disclosed. The network includes a plurality of nodes having a protection switching agent. A plurality of virtual paths are provided between a data packet gateway, such as an internet gateway, and the local nodes that are coupled to the network nodes of the ring network. A virtual channel identifier is embedded within data packets transported on the network, so that the protection switching agent can determine whether to route received packets to the local node or the cut-through dowmstream path circuit.

In US 2001/0043603 A1 an interface apparatus and method for adapting ethernet directly to physical channel is disclosed. MAC frames are encapsulated into SDH/SONET SPE/VC using LAPS. The LAPS encapsulation consists of the start flag sequence, address field, control field, information field, FCS, and the ending flag sequence. The apparatus is e.g. used to provide Ethernet interface in telecom SDH/SONET transmission.

In US 6 189 122 B1 a method and apparatus for controlling data retransmission is disclosed. The format of RLP control and data frames is defined so that each RLP frame includes an 8-bit sequence number field (SEQ). Each RLP data frame SEQ field contains the sequence number of that particular data frame. The sequence numbers are used to identify each received data frame and allow determination of data frames that have not been received. The RLP control frame SEQ field is not used to indicate the sequence number of teh control frame but contains the next data frame sequence number to allow quick detection of erased data frames.

The above known procedure has the following main disadvantage: in case of failure of one SDH (or SONET) Virtual Container, the Ethernet traffic becomes completely lost; this is a consequence of the distribution of the Ethernet frame content among all the Virtual Containers, as said above. Furthermore, a failure in a basic pipeline (the single Virtual Container) leads to the failure of the complete pipe (the concatenation of all the Virtual Containers).

In view of the above problems, the general object of the present invention is overcoming them in an efficient manner.

The main scope of the present invention is providing a method and device for an enhanced transport of Ethernet frame traffic over a transport SDH/SONET network through packet concatenation.

The above and further objects of the present invention are obtained by a method and network element according to claims 1 and 3, respectively. Further advantageous features of the present invention are set forth in respective dependent claims. All the claims are intended as an integral part of the present description.

The basic idea of the proposed solution is to assign the transport of an Ethernet frame to a single Virtual Container. This means that different Virtual Containers concurrently transport different frames (it is further stressed that through the Virtual Concatenation, all the Virtual Containers concurrently transport the same frame).

Independent basic pipelines make up the pipe and every pipeline transports a subset of Ethernet frames assigned to the complete pipe; by the Virtual Concatenation, every frame is transported by the complete pipe.

This type of concatenation has been named Packet Concatenation.

The present invention operates through a new layer/network which is provided over the SDH/SONET network in order to manage the transport of Ethernet traffic over SDH/SONET network; this new layer/network uses the resources of SDH/SONET network in such a way as to optimize the provided services and the performances with reference to this specific type of transport. Such a new layer has been fully disclosed and claimed in a previous patent application (EP02290445.2) of the same applicant of the present one.

The present invention will become clear in view of the following detailed description, to be read having reference to the attached sheets of drawings, wherein:
- Fig. 1 shows the structure of a VPN and relating circuits and corresponds to Fig. 1 of EP02290445.2;
- Fig. 2 shows a pipe comprising four Virtual Containers; and
- Fig. 3 shows the two functional blocks managing the insertion and estraction of an Ethernet frame into a Virtual Container.

As said above, the present invention operates in a layer/network which is termed NETS (i.e. Network of Ethernet Transport over SDH/SONET) and is disclosed in EP02290445.2. The NETS comprises basic elements that are listed below for a better comprehension of the present invention.

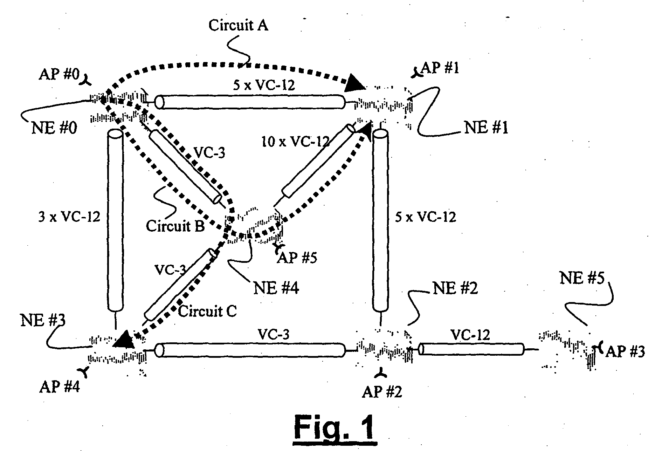

The NETS model comprises five basic elements: Access Point, Link, Circuit, Pipe and Path. An Access Point (AP) is an Ethernet interface at the boundary of an SDH/SONET network; it is the point where the Ethernet traffic can access/leave the SDH/SONET network. Fig. 1 depicts a simple example of network comprising six Network Elements (NE) with each network element having an Access Point; naturally, a Network Element can host more than one Access Point.

A pair of Ethernet Access Points defines a point to point connection; this connection is named Link. For instance, with reference to Fig. 1, the pair AP #0 & AP #1 identifies a link; the couple AP #2 & AP #5 defines another link, and so on.

An SDH/SONET network could allow for the connection of two Access Points (i.e. to accomplish a Link) by means of different routes; every route is named Circuit. A Circuit is obtained by a Pipe concatenation and could be considered as a series connection of N Pipes.

In its turn, every Circuit/route that connects two Access Points can be divided into a sequence of smaller segments; every segment is named Pipe.

The basic pipeline is the Virtual Container that connects two Network Elements; it is named Path.

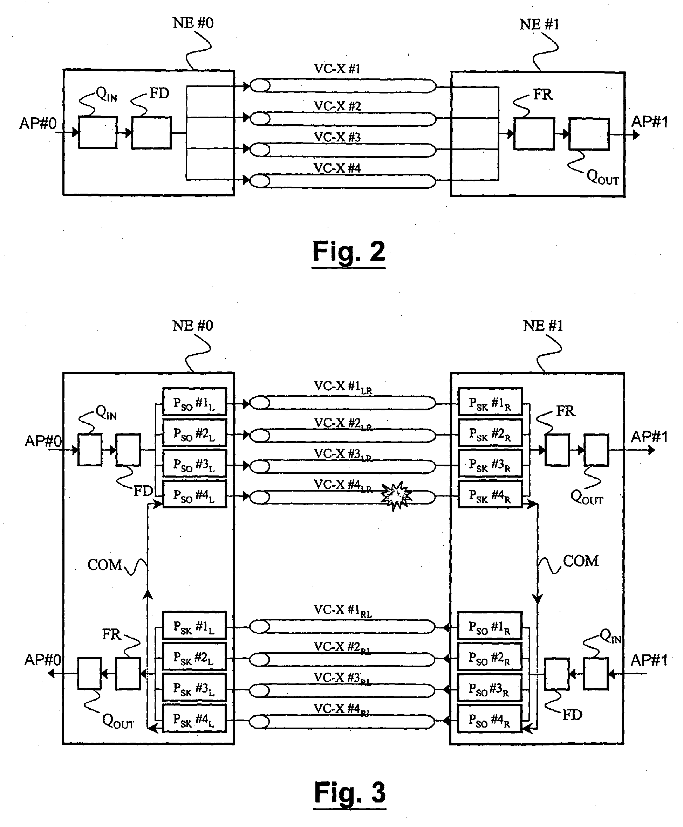

Fig. 2 depicts a pipe connecting Access Points AP#0 and AP#1 (at NE#0 and NE#1, respectively), the pipe comprising four Virtual Containers, namely VC-X# 1 to VC-X# 4. For instance, the VCs of the pipe could be VC-4 or VC-12 (please note that the pipe of Fig. 2 does not correspond exactly to the one of Fig. 1).

At NE#0, the Ethernet frames incoming through AP#0 are stored into a queue buffer Q_{IN}; let consider a sequence of frames (not shown) labelled as A, B, C, D, E, etc...

The output of incoming Ethernet frame queue buffer Q_{IN} is provided to a frame dispatcher FD assigning a frame to every Virtual Container. For instance, frame A is assigned to VC-X #1, frame B to VC-X #2, frame C to VC-X #3 and frame D to VC-X #4. During such an assignment operation, a sequence label/number is attached to every frame.

Every Virtual Container (VC-X# 1 to VC-X# 4) of the pipe performs the transport of the assigned Ethernet frame to the end Network Element NE#1 but, due to the fact that different Virtual Containers along different paths concurrently transport different frames, at the ending point, the received frames must be re-ordered so that the original sequence is obtained. Such a re-ordering is done at a frame re-ordering block (FR) by using the label/number that was attached thereto at NE#0.

At the ending network element NE#1, the frame re-ordering block FR is thus provided for re-arranging the sequence of received frames in a correct manner. The output of the frame re-ordering block is fed to a buffer of outgoing frames Q_{OUT}. For instance, we consider that the sequence of frames received at the ending point is B, D, A and C. In this case, only after receiving frame A, both frames A and B can be stored in the outgoing frame queue buffer Q_{OUT} to be transmitted. Analogously, only after the reception of frame C also frames C and D can be stored in the same queue to be transmitted as output.

At the transmission side (NE#0), the next frame of the queue of incoming frames will be assigned to one of the four Virtual Containers. For instance, it could be assigned to the first VC that has completed the transport of currently assigned frame. The same will be made for the following incoming Ethernet frames that will be transported by respective available VC. At the receiving side, the received frames are re-ordered and stored in the outgoing frame queue buffer Q_{OUT} for the output thereof through the Access Point AP #1.

In the above example, the criterion of assignment of a frame to a VC is very simple: a frame is assigned to the first available VC. Obviously, more complex and efficient criteria can be used. It should be noticed that the assignment criterion does not affect the basic idea of this new type of concatenation.

Advantageously, according to the present invention (see Fig. 3), in case of failure of a Virtual Container (e.g. VC-X #4), it can be removed from the pipe and the remaining Virtual Containers (VC-X #1, VC-X #2 and VC-X #3) perform the Packet Concatenation with reduced resources.

Thus, a failure on a basic pipeline does not result in the complete loss of the traffic but just in a bandwidth reduction.

There now follow an exemplifying description of how the removal of a failed Virtual Container is performed.

Fig. 3 depicts the pipe of Fig. 2 in a more detailed manner in order to show the two functional blocks that manage the insertion and extraction of an Ethernet frame into a Virtual Container. The blocks are named Path source P_{SO} and Path sink P_{SK} blocks, respectively. The "L" suffix of blocks of Network Element NE#0 stands for left; analogously, the "R" suffix of blocks of Network Element NE#1 stands for right.

Let consider as an example a failure occurred on VC-X #4_{LR} (namely, from NE #0 to NE #1). Path sink P_{SK} #4R detects the failure as it does not receive any frame and provides the related failure information to Path source Pₛₒ #4_{R} through a communication channel COM; the transmission of Ethernet frames on VC-X #4_{RL} is disabled and just status information are forwarded to Path sink P_{SK} #4_{L} by means of the VC-X #4_{RL} itself.

The failure information is received by Path sink P_{SK} #4_{L} and forwarded to Path source P_{SO} #4_{L} that in its turn disables the transmission of Ethernet frames; at this moment the VC-X #4 is completely disabled in both directions and this condition will stay until the disappearance of failure detection.

In the above example the pipe dimension is dynamically modified in order to recover from a failure. The dynamic modification of the pipe dimension can be performed also in absence of failure just to increase/decrease the pipe capability; this feature is performed by the same communication channel already described and without any loss of Ethernet frames.

The management of the communication channel for dynamic sizing of the pipe is not further disclosed in this application. As already described, the present invention results in two main advantages:
- in case of failure of one Virtual Container the bandwidth is reduced but the traffic is not completely lost; and
- a dynamic modification of the pipe dimension without any traffic loss is possible.

There have thus been shown and described a novel method and a novel network element which fulfill all the objects and advantages sought therefor. Many changes, modifications, variations and other uses and applications of the subject invention will, however, become apparent to those skilled in the art after considering the specification and the accompanying drawings which disclose preferred embodiments thereof.

## Claims

1. A method for transporting an Ethernet signal through a pipe from a sending point (AP#0) to a receiving point (AP#1) over at least one SDH/SONET network, the at least one SDH/SONET network comprising network elements or nodes (NE# 0, NE#1,...NE#5), fiber connections connecting the network elements and SDH/SONET virtual containers (VC-X #), the transport being managed through a new layer over SDH/SONET network physical layer, the new layer comprising Access Points (AP #), links of Access Point pairs and circuits, namely the possible routes for connecting a pair of Access Points, the method comprising the steps of:
at the sending point (AP#0), receiving Ethernet frames to be transported through an Access Point (AP#0); mapping the Ethernet frames into single Virtual Containers (VC-X #) such that the transport of each Ethernet frame is performed by one single Virtual Container (VC); assigning a label/number to every frame; and
at the receiving point (AP#1), re-ordering (FR) the received frames according to the assigned sequence label/number and outputting them through an Access Point (AP#1),
the method being **characterized by**: in case of failure of a Virtual Container (VC-X#4_{LR}), communicating (COM, VC-X#4_{RL}) the failure information to the sending point so that it disables the transmission of Ethernet frames until the failure is restored, the pipe bandwidth being dynamically modified.

2. Method according to claim 1, **characterized by** further comprising, at the sending point (AP#0), the step of storing the Ethernet frames to be transmitted into an incoming frame queue buffer (Q_{IN}) and, at the receiving point (AP#1), the step of storing the received Ethernet frames into an outcoming frame queue buffer (Q_{OUT}).

3. Network Element (NE# 0, NE#1,...NE#5) of a SDH/SONET network able to transport an Ethernet signal through a pipe from a sending point (AP#0) to a receiving point (AP#1), the SDH/SONET network comprising further network elements, fiber connections connecting the network elements and SDH/SONET virtual containers (VC-X #), the transport being managed through a new layer over SDH/SONET network physical layer, the new layer comprising Access Points (AP #), links of Access Point pairs and circuits, namely the possible routes for connecting a pair of Access Points, the network element comprising:
a mapper and scheduler (FD) for mapping received Ethernet frames into single Virtual Containers (VC-X #) such that the transport of each Ethernet frame is performed by one single Virtual Container (VC);
means (FD) for assigning a label/number to every frame; and
re-ordering means (FR) for re-ordering the received frames according to the assigned sequence label/number.
the network element being **characterized by** further comprising a communication channel (COM) for communicating, in case of failure of a Virtual Container (VC-X#4_{LR}), failure information to the sending point so that it disables the transmission of Ethernet frames until the failure is restored, the pipe bandwidth being dynamically modified.

4. Network element according to claim 3, **characterized by** further comprising an incoming frame queue buffer (Q_{IN}) for storing the received (AP#0) Ethernet frames to be transmitted and an outcoming frame queue buffer (Q_{OUT}) for storing the received Ethernet frames before the output thereof through a proper Access Point (AP#1).

## Patentansprüche

1. Verfahren zum Transport eines Ethernet Signals über eine Pipe von einem Sendepunkt (AP#0) zu einem Empfangspunkt (AP#1) über wenigstens ein SDH/SONET Netzwerk, wobei das wenigstens eine SDH/SONET Netzwerk Netzwerkelemente oder Knoten (NE#0, NE#1, ...NE#5) umfasst, Glasfaserverbindungen, die die Netzwerkelemente verbinden, und virtuelle SDH/SONET Container (VC-X #), wobei die Übertragung über eine neue Schicht über der physikalischen SDH/SONET Netzwerkschicht verwaltet wird und die neue Schicht Zugangspunkte (AP #), Verbindungen zwischen Zugangspunktpaaren und Schaltungen, nämlich die möglichen Routen für die Verbindung eines Paars von Zugangspunkten umfasst, wobei das Verfahren folgende Schritte umfasst:
Empfangen von Ethernet Rahmen, die über einen Zugangspunkt (AP#0) transportiert werden sollen, am Sendepunkt (AP#0); Kartieren der Ethernet Rahmen in einzelne virtuelle Container (VC-X #), so dass der Transport jedes Ethernet Rahmens von einem einzigen virtuellen Container (VC) durchgeführt wird; Zuteilen einer Markierung/Nummer an jeden Rahmen; und
Umsortieren (FR) der empfangenen Rahmen entsprechend der zugeteilten Markierung/Nummernfolge am Empfangspunkt (AP#1) und Ausgabe durch den Zugangspunkt (AP#1), wobei das Verfahren **dadurch gekennzeichnet ist, dass** im Falle eines Fehlers eines virtuellen Containers (VC-X#4_{LR}) die Fehlerinformation dem Sendepunkt mitgeteilt wird (COM, VC-X#4_{RL}), so dass die Übertragung von Ethernet Rahmen gesperrt wird, bis der Fehler behoben ist, wobei die Pipe Bandbreite dynamisch geändert wird.

2. Verfahren nach Anspruch 1, **dadurch gekennzeichnet, dass** es weiterhin am Sendepunkt (AP#0) den Schritt des Speicherns der zu sendenden Ethernet Rahmen in einen Eingangsrahmen- Warteschlangenpuffer (Q_{IN}) umfasst und am Empfangspunkt (AP#1) den Schritt des Speicherns der empfangenen Ethernet Rahmen in einen Ausgangsrahmen- Warteschlangenpuffer (Q_{OUT}).

3. Netzwerkelement (NE#0, NE#1, ...NE#5) eines SDH/SONET Netzwerks, das in der Lage ist, ein Ethernet Signal über eine Pipe von einem Sendepunkt (AP#0) zu einem Empfangspunkt (AP#1) zu transportieren, wobei das SDH/SONET Netzwerk weitere Netzwerkelemente umfasst, Glasfaserverbindungen, die die Netzwerkelemente verbinden, und virtuelle SDH/SONET Container (VC-X #), wobei die Übertragung über eine neue Schicht über der physikalischen SDH/SONET Netzwerkschicht verwaltet wird und die neue Schicht Zugangspunkte (AP #), Verbindungen zwischen Zugangspunktpaaren und Schaltungen, nämlich die möglichen Routen für die Verbindung eines Paars von Zugangspunkten umfasst, wobei das Netzwerkelement umfasst:
eine Kartiereinrichtung und eine Ablaufsteuerung (FD) zum Kartieren der empfangenen Ethernet Rahmen in einzelne virtuelle Container (VC-X #) so dass der Transport jedes Ethernet Rahmens von einem einzigen virtuellen Container (VC) durchgeführt wird; Mittel (FD) zum Zuteilen einer Markierung/Nummer an jeden Rahmen; und
Umsortiermittel (FR) zum Umsortieren der empfangenen Rahmen entsprechend der zugeteilten Markierung/Nummernfolge, wobei das Netzwerkelement **dadurch gekennzeichnet ist, dass** es weiterhin einen Kommunikationskanal (COM) umfasst zum Übermitteln einer Fehlerinformation im Falle eines Fehlers eines virtuellen Containers (VC-X#4_{LR}) an den Sendepunkt, so dass dieser die Übertragung von Ethernet Rahmen sperrt, bis der Fehler behoben ist, wobei die Pipe Bandbreite dynamisch geändert wird.

4. Netzwerkelement nach Anspruch 3, **dadurch gekennzeichnet, dass** es weiterhin einen Eingangsrahmen- Warteschlangenpuffer (Q_{IN}) umfasst zum Speichern der zu sendenden Ethernet Rahmen und einen Ausgangsrahmen- Warteschlangenpuffer (Q_{OUT}) zum Speichern der empfangenen Ethernet Rahmen vor deren Ausgabe durch einen geeigneten Zugangspunkt (AP#1).

## Revendications

1. Procédé pour transporter un signal Ethernet à travers un tuyau d'un point d'envoi (AP #0) à un point de réception (AP #1) sur au moins un réseau SDH/SONET, ledit au moins un réseau SDH/SONET comprenant des éléments de réseau ou des noeuds (NE #0, NE #1, ... NE #5), des connexions par fibres connectant les éléments de réseau et des conteneurs virtuels SDH/SONET (VC-X #), le transport étant géré par l'intermédiaire d'une nouvelle couche sur une couche physique de réseau SDH/SONET, la nouvelle couche comprenant des points d'accès (AP #), des liaisons de paires de points d'accès et de circuits, à savoir, les voies possibles pour connecter une paire de points d'accès, le procédé comprenant les étapes consistant à :
au point d'envoi (AP #0), recevoir des trames Ethernet devant être transportées par l'intermédiaire d'un point d'accès (AP #0) ; mapper les trames Ethernet dans des conteneurs virtuels (VC-X #) uniques de sorte que le transport de chaque trame Ethernet soit effectué par un seul conteneur virtuel (VC) ; attribuer une étiquette/un numéro à chaque trame ; et
au point de réception (AP #1), réordonner (FR) les trames reçues conformément à l'étiquette/au numéro d'ordre attribué et les délivrer par l'intermédiaire d'un point d'accès (AP #1),
le procédé étant **caractérisé par** : en cas de défaut d'un conteneur virtuel (VC-X #4_{LR}), communiquer (COM, VC-X #4_{RL}) les informations de défaut au point d'envoi de sorte qu'il invalide la transmission de trames Ethernet jusqu'à ce que le défaut soit corrigé, la bande passante du tuyau étant modifiée dynamiquement.

2. Procédé selon la revendication 1, **caractérisé en ce qu'**il comprend, en outre, au point d'envoi (AP #0), l'étape consistant à mémoriser les trames Ethernet devant être transmises dans une mémoire tampon de file d'attente de trames entrantes (Q_{IN}) et, au point de réception (AP #1), l'étape consistant à mémoriser les trames Ethernet reçues dans une mémoire tampon de file d'attente de trames sortantes (Q_{OUT}).

3. Elément de réseau (NE #0, NE #1, ... NE #5) d'un réseau SDH/SONET capable de transporter un signal Ethernet à travers un tuyau d'un point d'envoi (AP #0) jusqu'à un point de réception (AP #1), le réseau SDH/SONET comprenant, en outre, des éléments de réseau, des connexions par fibres connectant les éléments de réseau et des conteneurs virtuels SDH/SONET (VC-X #), le transport étant géré par l'intermédiaire d'une nouvelle couche sur une couche physique de réseau SDH/SONET, la nouvelle couche comprenant des points d'accès (AP #), des liaisons de paires de points d'accès et de circuits, à savoir, les voies possibles pour connecter une paire de points d'accès, l'élément de réseau comprenant :
un dispositif de mappage et de planification (FD) pour mapper des trames Ethernet reçues dans des conteneurs virtuels (VC-X #) uniques de sorte que le transport de chaque trame Ethernet soit effectué par un seul conteneur virtuel (VC) ;
des moyens (FD) pour attribuer une étiquette/un numéro à chaque trame ; et
des moyens de réordonnancement (FR) pour réordonner les trames reçues conformément à l'étiquette/au numéro d'ordre attribué,
l'élément de réseau étant **caractérisé en ce qu'**il comprend, en outre, un canal de communication (COM) pour communiquer, en cas de défaut d'un conteneur virtuel (VC-X #4_{LR}), des informations de défaut au point d'envoi de sorte qu'il invalide la transmission de trames Ethernet jusqu'à ce que le défaut soit corrigé, la bande passante du tuyau étant modifiée dynamiquement.

4. Elément de réseau selon la revendication 3, **caractérisé en ce qu'**il comprend, en outre, une mémoire tampon de file d'attente de trames entrantes (Q_{IN}) pour mémoriser les trames Ethernet (AP #0) reçues devant être transmises et une mémoire tampon de file d'attente de trames sortantes (Q_{OUT}) pour mémoriser les trames Ethernet reçues avant leur sortie par l'intermédiaire d'un point d'accès (AP #1) correct.
